# EUROPEAN PATENT SPECIFICATION

(11) **EP 1 470 081 B1**
(45) Date of publication and mention of the grant of the patent: **27.09.2006**
(21) Application number: 03700124.5
(22) Date of filing: 17.01.2003
(51) Int. Cl.: C02F 1/461, C02F 1/36

(54) **DEVICE FOR ELECTROLYTIC PURIFICATION OF LIQUIDS**
VORRICHTUNG ZUR ELEKTROLYTISCHEN REINIGUNG VON FLÜSSIGKEITEN
DISPOSITIF D'EPURATION DE LIQUIDES PAR VOIE ELECTROLYTIQUE

(30) Priority: 18.01.2002 FI 20020102
(43) Date of publication of application: 27.10.2004
(73) Proprietor: Seppä, Ilari, 60320 Seinäjoki (FI)
(72) Inventor: Seppä, Ilari, 60320 Seinäjoki (FI)
(74) Representative: LEITZINGER OY
(86) International application number: PCT/FI2003/000034
(87) International publication number: WO 2003/059823

(56) References cited:
- EP-A1- 0 769 475
- WO-A1-01/14258

## Description

The invention concerns a method and an apparatus to purify a liquid, especially aqueous solutions, wastewater, sludge and similar, through the means of electrolyses, by leading the solution through the electric field of two electrodes.

It is known that water can be disinfected and purified by means of an electric current.

It is also known to feed a NaCl solution toegther with water through electrodes or across the electrodes, whereby the generated Cl₂ or ClO⁻ is oxidizing impurities and disinfecting the water. Also the water may contain natural chlorides, thus there is no need for the addition.

Purificatiion of solutions, especially wastewaters, has been described for instance in US-patents 5 022 974, 6 099 703 and 6 214 182. These known methods are effective for purification of relatively slightly polluted solutions and their effects are limited. Additionally, the purified solutions may still contain impurities after purification, which may be tedious to remove. In case the solution to be purified contains impurities of different kinds, the today known methods are not able to remove them all.

The present invention presents an apparatus, which simply and effectively can purify liquids, solutions, sludge and similar. Characteristic for this new innovation is that, it consists of at least one pair of electrodes, between said electrodes a flow channel is formed for the water to be treated, and at least one ultrasound source which is directing the ultrasound beam towards the flow channel and thus into the liquid to be treated. The reasons for the ultrasound is to get the boundary layer between the electrode and the water as thin as possible. According to the tests done, the mass transfer is improved by many orders of magnitude. The ultrasound also prevents the formation of microscopic bubbles due to polarisation, or bubbles are formed in very small amounts. The combination of ultrasound and electrolyses improves the purification process considerably.

Magnetostrictive vibration, or fast pulsation, is applied to improve the mass transfer between the boundary layer and the main stream.

The electrodes in the apparatus described in the invention can be combined to form symmetrical rings, which consist of outwards directed pairs of electrodes, where their flow channel is in flow connection with the central channel. The electrode rings may reasonably be several, for instance 2 - 7 in the longitudinal direction of the central channel. Ultrasound can be utilized as much as possible advantageously by this means.

The electrodes may be organized in the apparatus described by the invention so that they form rectangular or parallelogram groups. Thus the electrodes may be utilized by both sides, that means the positive and the negative sides are alternatively parallel. The electric power is fed on the opposite site into each electrode, respectively, from current rails or current plates.

The electrodes are widening in the direction of flow, thus the flow velocity is decreasing, respectively. This is necessary, because the electric conductivity of the liquid is decreasing in the flow direction, due to the fact that the concentration of the conducting ions is decreasing because of electro-chemical reactions.

In order to conduct the formed gases as effectively as possible, as well as to prevent the formation of gas pockets, the flow channel is essentially straight, and is inclined upwards towards the outlet, where the gasses are removed.

In order to improve removal of different kinds of impurities, the electrodes in the flow direction may be divided into segments. These segments may have reciprocally different properties regarding effect, construction material, design, dimensioning, etc. The electrodes may be of different metal or of the same metal, depending on the application. If required the electrodes may be coated with oxide of some platinum group metal to prevent corrosion or polarisation.

The electrodes are fixed to metal bodies, having sufficiently good conductivity, for instance copper or aluminium, so that the current flux between the electrodes would be as even as possible.

In the central channel one or more ultrasound probes is installed, for instance 1 kW by effect and 20 KHz by frequency.

The water to be treated is fed into the central channel at the middle of the electrode system. From there it is flowing towards the inner walls of the system. Equally the flow direction may be the opposite, too. The water may be fed in, passing the ultrasound probe or from the opposite side, or from both sides. The ultrasound waves are progressing between the electrode plates, reflecting from the electrodes to wards the boundaries. When the equipment is larger, there several ultrasound probes may be installed between an electrode group, directed towards the central channel. In case the electrode system is rectangular or trapezoidal the ultrasound probe may be located in the inlet channel at each slot.

An ultrasound probe of larger effect may be needed when the particle density is larger or the large gas generation is damping the progress of the sound waves.

When the case concerns treatment of sludge or mud of minor particles the harmful ions are either removed or destroyed. The precipitate can be removed by means of a filter fitted with an internal or an external clarifyer. In case of larger applications a centrifugal separator may be used.

In case of treatment of a very dirty water, which may contain for instance humus, the colloidal or other separated material may precipitate as such a dense sludge, that the deposit has to be removed by a separate, either internal or external clarifier or filter.

The equipment must be built in a way that it can be easily cleaned, and the construction parts allow use of adequate cleaning chemicals.

On the applied electrodes appear electrode equations as follows:
**Ti/Ti** electrodes:
   On the cathode is generated hydrogen (H₂)
   On the anode is generated oxygen (O₂) or (Cl₂) from chlorides
   Cyanide-iron complexes (Fe-CN) are hydrolysed and oxidised
   The humic acids are precipitated and the pH rises by 2- 3 units.
**Fe/Fe** electrodes:
   Iron is dissolved from anode, which is precipitated as Fe(OH)₂ at acidic pH, and as Fe(OH)₃ at alkaline pH. The hydroxide is in the state of *in statu nascendii,* there of follows that it adsorbs strongly other ions and organic components.
   **As**^{**3+**} is oxidised and is precipitated as FeAs0₅ with a very low residual concentration. (GSF analyses)
   The sulphides and the mercaptanes react with iron anode and form black Fe₂S₃.
   Also copper originated from copper arsenate is precipitated as a colloidal sulphide.

The complexes forming ions, such as phosphates, are precipitated as FeP0₄ salts.
**Ni/Ni** electrodes:
   Ni-ions precipitate on Ni-cathode.
**Al/ Al** electrodes:
   Aluminium is going into water as hydroxide, which is *in statu nascendii-*stage, and it adsorbs strongly other ions. Aluminium electrodes are applied when sulphate-ions shall be removed as Al₂(S0₄)₃. Thus sulphate content in potable water can be reduced.
**C/C** electrodes:
   Graphite may also be used as electrode material, but as an anode it forms CO₂.

When Na⁺ or K⁺ ions are reaching the cathode, they form hydrogen H₂ and corresponding hydroxide.

When Cl⁻ ion reacts with the anode it forms Cl₂, which is removed as gas as well. Additionally in alkaline solution hypochlorite is formed. Note that when chemical oxygen demand or permanganate number is to be determined by titration with KMnO₄-solution, chlorine or hypochlorite-ions are oxidised to chlorate ions, (Gibbs-Helmolz free energy is negative). Thus one may easily think that the raised value in question may be based on biomaterials. The natural waters generally always contain a little chloride.

When Mn²⁺ reaches cathode in alkaline media it will be oxidised to Mn⁴⁺, which is precipitated as hydroxide, and this will slowly form MnO₂. In an acidic media it will be oxidised into Mn0₄⁻.

Ni²⁺ ion is either precipitated on the Ni-cathode as metal or it is precipitated as Ni(0H)₂.

In acidic environment As³⁺ ion is oxidised on the cathode into As⁵⁺ and in an alkaline media into AsO₅³⁻.

U²⁺ ion is oxidised into uranate and is precipitated as ferric uranate.

### Combination of electro dialyses and electrode reactions.

When removal of dissolved ions is wanted, which cannot be precipitated, the electrodes may be coated with an electro-dialyse membrane, which is semipermeable. One membrane is passing cat ions and the opposite one is passing anions. In this case several ultrasonic probes may be needed. In larger applications one may also apply ultrasonic probes at the exit side of the electrodes, i.e. against water flow direction.

When electro dialyses membranes are applied the removed ions are received as a concentrated solution separately and the purified water separately through different channels. The said membranes are close to the electrode surface, and between them is a net, which forms a sufficient escape channel for the removed brine solution.

In the case of the electro dialyses, the following is to be considered:

The membrane next to the cathode is passing cat ions, which are moving towards it, but they do not get back. On the other hand, the anions do not pass the said membrane.

On the membrane next to the anode the anions behave, respectively.

The cat ions that can be precipitated are removed in the previous cell and removed. Otherwise they attach to the membrane and block it. Similarly the anions behave respectively. Between the membranes remains the ion poor water.

Especially, the radioactive ions have to be removed with great accuracy, but all those ions are not necessarily precipitated by electrode reactions. Due to the poor conductivity of pure water, ions are not removed with a sufficient accuracy. Hence sufficient number of cells with electro dialyses membranes is needed, and for instance NaCl is added into the water between each stage, while the relative fraction of radioactive ions is decreased each time. A few "iteration" rounds will soon reach an ion concentration of an order of magnitude below ppb-level.

Essential for the apparatus according to the invention for cleaning water by electrolyses is that the water to be purified is conducted through a field of electric current, and
- That the pairs of electrodes are located outwards from the central channel and a flow channel with a radial flow direction, in connection with the central channel. There is a DC-current field between the electrodes, with a typical current density of ca. 0,05 A/cm². The electric potential is determined by the distance of the electrodes and the conductivity of water, being typically 20V. To improve the chemical reactions between the electrodes and water, ultrasound sources are applied, typically 20 kHz, but other frequencies may be applied as well. The ultrasound source can be installed at the channels in suitable places and directing the sound waves into the space between the electrodes. A magnetostrictive vibrator may be installed in the entering water flow, at a suitable position.
- That the pairs of electrodes are (e.g. from the straight) directed from the central channel outwards and the water flow is conducted between them. The ultrasound source is located in the central channel and the magnetostrictive vibrator as before.
- That the electrodes are at the same distance apart from each other, alternatively, as an anode and a cathode and water is conducted between them, and the ultrasound source and the magneto-strictive vibrator as previously.
- The ultrasound source may be fixed at the electrodes as well. In this case the ultrasound is effecting the water flowing between the electrodes.
- The electrodes may be divided into successive segments or separate zones not in connection with each other, which may have their own ultrasound source. This provides that the pH and the conductivity of the water are suitable as the water is moving directly from one cell into another.
- The electrode material can be titanium, coated with an oxide of suitable platinum metal. The electrodes may also be made of base metal, as iron, nickel, aluminium or graphite, both pairs of the same metal, because the direction of the current has to be possible to change from time-to-time.
- The clearance between the electrodes may be adjusted according to the application in order to get the best effect of the purification. A typical clearance is 10 - 50 mm.
- Water is pumped at such a rate, as a suitable residence time is found to get a sufficient purification effect. The water flow may also be pulsated in order to maintain the precipitate moving and to improve removal of gas bubbles generated.
- The generated precipitate in the water may be removed either by a separate or a built-in clarifier/filter.
- The flocculation of the precipitate may be improved by the utilisation of a suitable polyelectrolyte.
- To improve electrical conductivity a suitable electrolyte, typically NaCl, may be added.
- Removal of harmful ions may also be improved, by a known method, by application of a suitable micro-, nano- or ultra-filtration or reverse osmosis membrane, then the precipitated and possibly colloidal particles do not get back into the water to be treated.
- Application of electro dialyses membranes may also remove harmful ions that do not precipitate or co-precipitate as metal hydroxide. The membrane lets an ion pass into the space between itself and the electrode, but not the reverse.
- The water in the said stage has to be sufficiently electrically conductive from the start. When the ion content of the water has decreased to a level where the conductivity has been reduced to a certain value, water has to be "salted again" with a neutral salt, such as NaCl, for the next run. By this means the content of harmful ions can be reduced to total insignificance. The mobility number (Λ) has to be as closely as possible of the same magnitude, compared to the mobility number of the ions to be removed. This concerns especially radioactive materials.
- Additionally dissolved ions from a sub-micron precipitate may be washed, by means of an electro dialyses membrane. Water is forced into a tangential movement between the electrodes, thus the precipitate is removed more easily in the clarifier section.
- One electrode system (or both of them) may rotate in respect to the central axis. By this means there is achieved a better movement of the precipitate through the space between the electrodes. It generates suction, thus an ordinary pump may possible not be needed. The rotary section may contain spiral guiding wings. The electrodes are connected to each other, but as they rotate together, it causes the water to flow more effectively as well as the precipitate to detach better. Also in this section guiding wings can be applied. This alternative suits well e.g. the stabilisation of sludge manure and of aerobic and anaerobic sewage sludge.

Some suitable implementation forms of the innovation are described by the following examples, without any limitation of the innovation.

### Example 1:

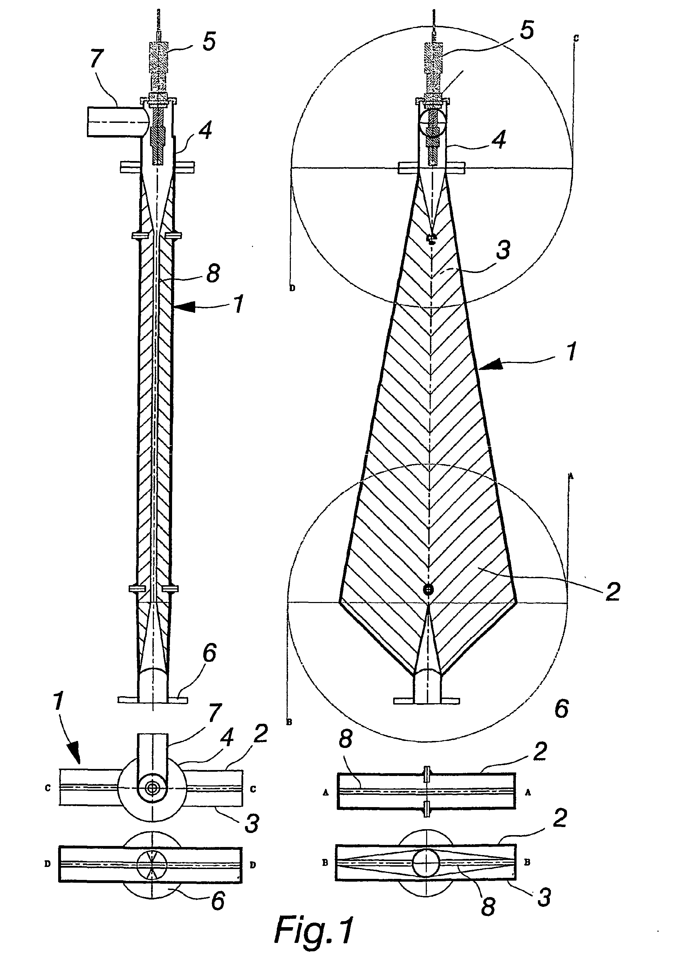

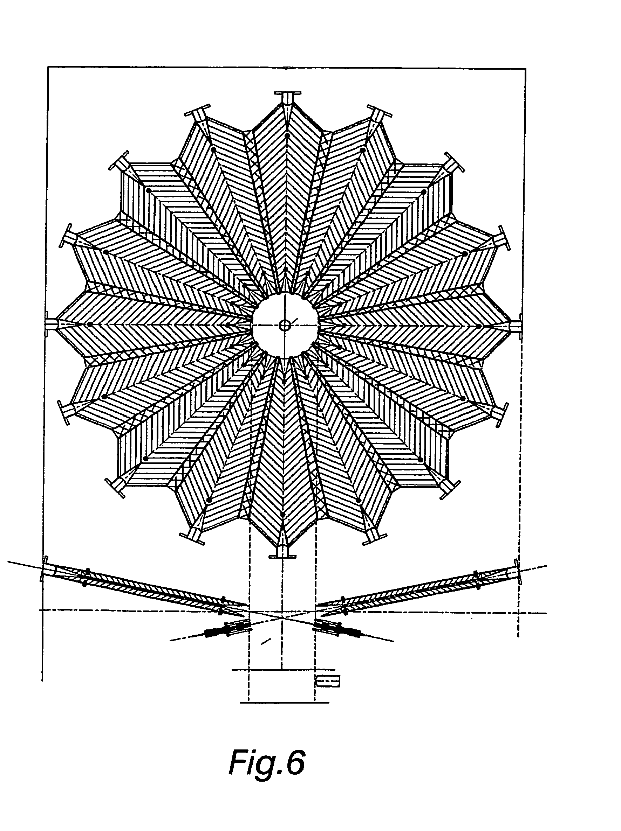

An ultrasound probe is installed in the central channel (D=100mm), where the water to be treated is fed in tangential direction, so it gets a rotating movement. The water is fed further into the space between the electrodes, from where it with tangential rotation flows towards the sides. In this kind of apparatus the electrodes are segments of a circle, so that the tangential movement is able to pass the space between the electrodes. Upstream is a magnetostrictive vibrator and a possible pulsator installed. See Figs 1 and 6.

The space between the electrodes can be adjusted suitably between 10 and 50 mm. From the pictures can be seen how the pairs of electrodes are located co-centric. The electrode materials are titanium (Ti), nickel (Ni), graphite (C) or aluminium (Al), each material having its appropriate use. The applied dimensions depend on the use, which can be found from different application tests that are done with a prototype. The electrodes have to be thick enough for the electric flux to become even.

It is essential, that the width of the electrode pairs increase in the flow direction, while the space between them remains constant, so that the linear flow velocity decreases respectively. By this the slow disappearance of the ions affecting conductivity, from the water is compensated, hence the conductivity decreases.

The principal difference between the methods is the placing of the ultrasound probe. In the first case water enters at the probe side and in the later alternative at the opposite side. Both of the methods have their own advantage.

### Example 2:

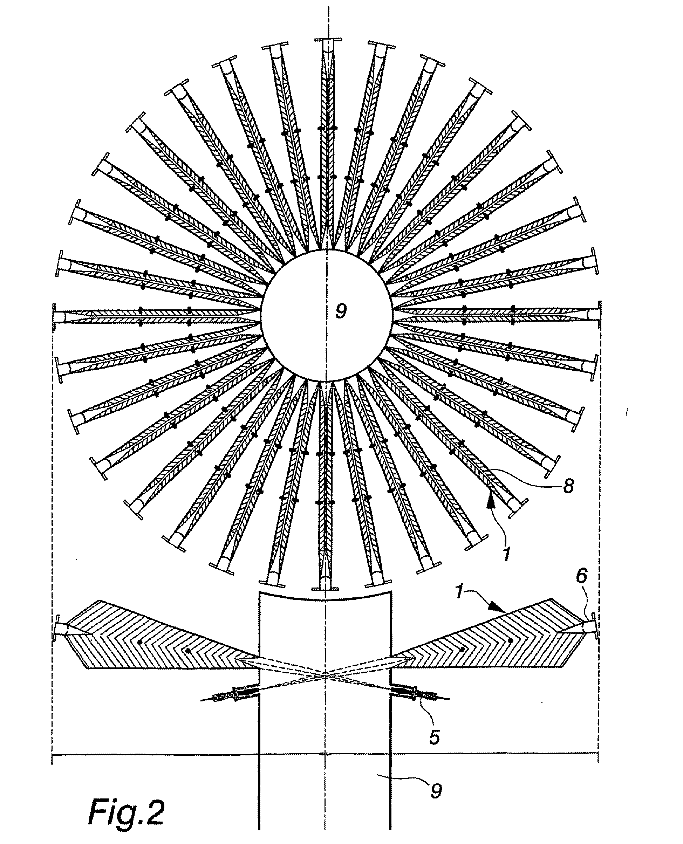

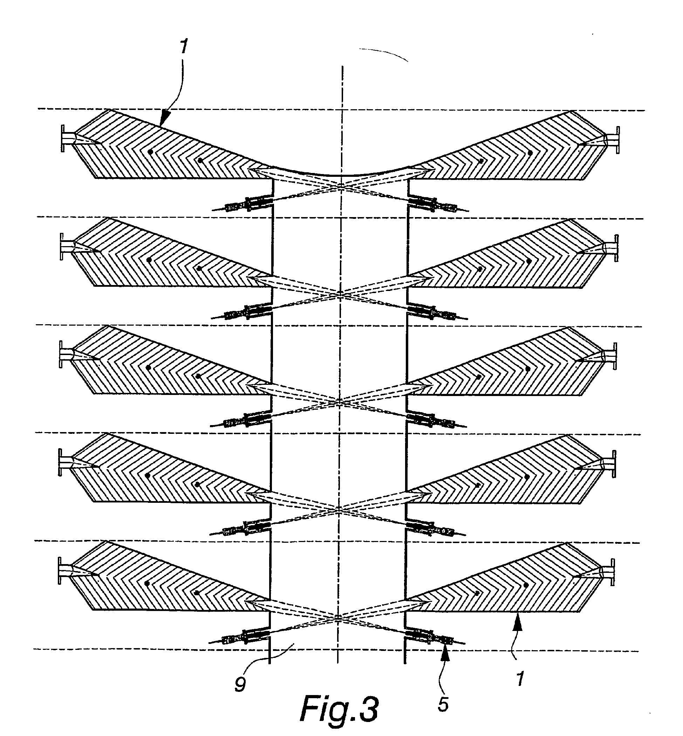

In respect to the previous alternative, the pairs of electrodes are rotated 90° in respect to the longitudinal axis, Figures 2 and 3. In this case more pairs of electrodes can be installed per one ultrasound probe. The above description applies to the magnetostrictive vibrator, pulsator, and the removal of gases. The ultrasound probe may be located in the inlet pipe at the longitudinal axis, a rod-like vibrator, of larger power, but one is enough for several pairs of electrodes.

### Example 3:

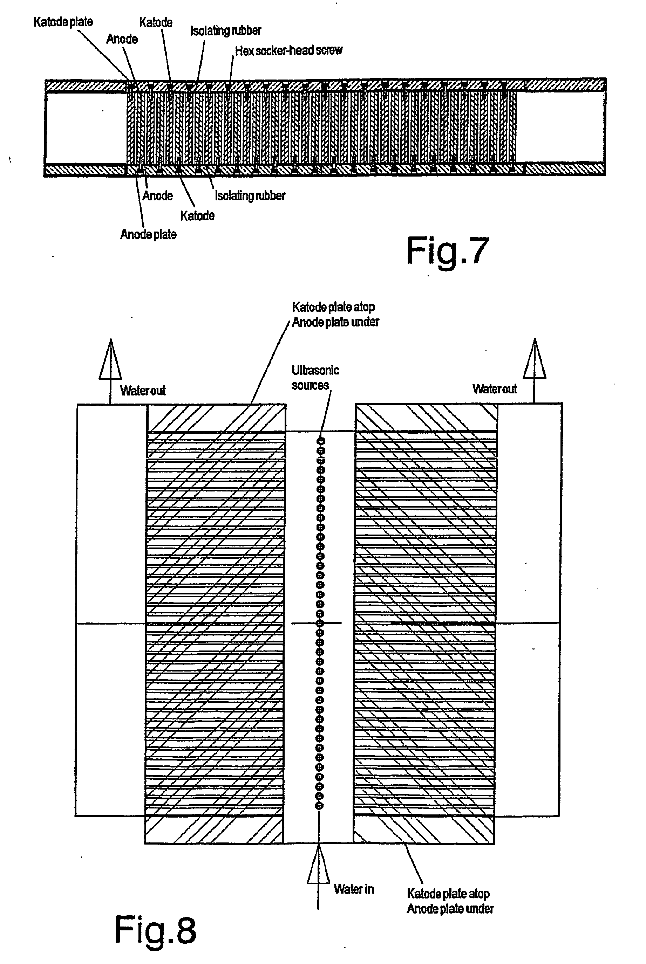

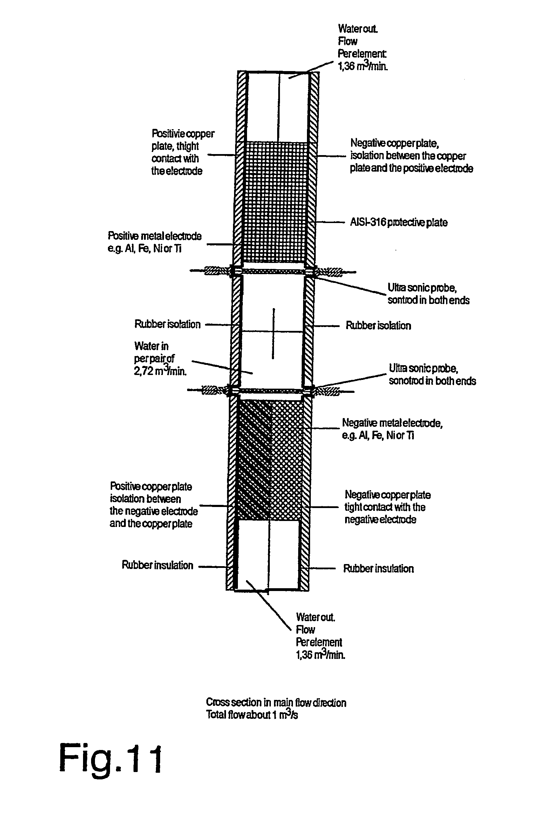

Opposite to examples 1 and 2, the electrodes are side-by-side (Figs 7 and 11). The ultrasound probes are located in the central channel. When the central channel is decreased towards the end to 0 (zero), and the outlet channel decreases towards zero at the entry, a better flow technique arrangement is obtained. The electric current feed plates are located at opposite sides from the electrodes, isolated from the electrodes, but are fixed with bolts, cathode plate to cathodes and anode plate to anodes. The magnetostrictive vibrator is located at the entry channel. The electrodes are widening towards the flow direction, while the (linear) flow velocity decreases, as in the previous alternative. Then the gases are also easy to conduct out with the out going flow.

### Example 4:

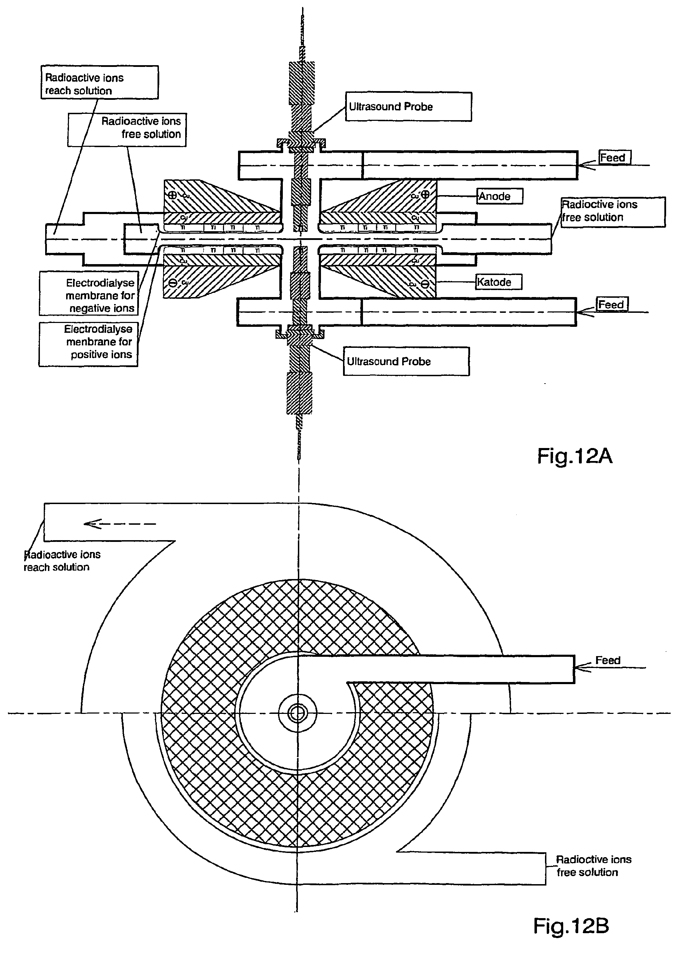

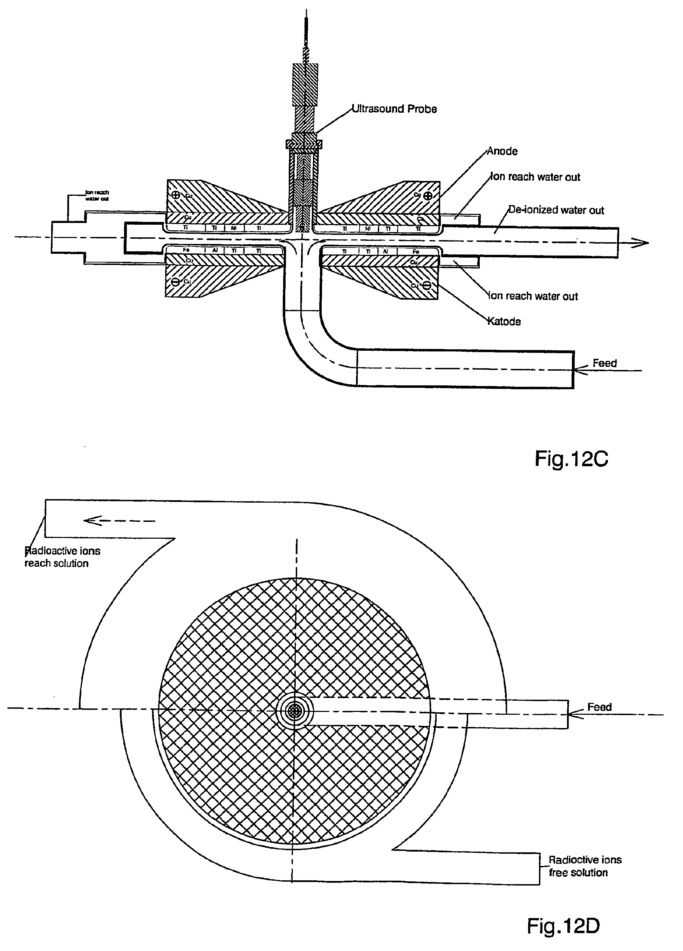

Describes the electrode cells, where the electrodes are co-centric circles on top of each other (see Figures 12A - D).

The electrodes may be pairs, as is described in the Examples 1 and 2, or alternate, as is described in Example 3. The electrode material may be Al, C, Fe, or Ti, as in the previous ones, but in the same electrode cell preferably of the same metal, for easier control. However, the electrodes may be made sequentially of different metal segments (in all the alternatives), as far as it is possible with respect to the application.

Electro dialysis membrane can be installed in all the alternatives, however, in this description it has been added in this one. Titanium is the best cell electrode material in this case. One has to remember, that the ions that are possible to precipitate have to be removed first from the water, before the electro dialysis cells are applied, otherwise they are blocked.

### Principe of operation

The ultrasound makes the water vibrate at ca. 20 kHz frequency, (if needed, 35 or 70 kHz), thus the boundary layer of mass transfer becomes thinner. It is essential to prevent polarisation, therefore the direction of current is changed from time-to-time. The titanium electrodes have to be coated with a platinum metal oxide.

It is essential that the current density between the electrodes is kept as constant as possible. Therefore the current should be fed with Cu- or Al-plates, with good electrically conductivity, and the plates fixed to the electrodes in several places with bolts.

In order to increase the tangential movement, guiding wings may be inserted between the electrodes, which are made of non-conductive material. The water exits between the electrodes rotating tangentially, so rotation of the electrodes is not needed.

**The Fe-electrode** produces Fe(0H)₃ precipitate *in statu nascendii* -stage, which adsorbs as well as reacts with certain ions, getting them to precipitate.

**The Al-electrode** produces AI(OH)₃ precipitate at the same stage and with similar results. Al is applied to remove S0₄²⁻ from water.

**The Ti-electrode** is applied to generate an oxidising effect, which destroys microbes, their spores and toxins, and thus sterilises the water. If the solution contains Cl⁻, it is oxidised to Cl₂ or Cl0⁻, which promotes the sterilisation.

**The graphite-electrode** is chemically inert, and it may be used as an electrode, when the metallic electrodes are corroding too much, because of the components of the solution. The disadvantage in using graphite is that it forms CO₂ as a cathode.

pH of the water rises typically 2 units, due to the redox-reactions in the water.

### Practical tests done with a simple pair of plate electrodes:

Some examples of utilisation of ultrasound:

Industrial Chromium-VI solution, where it was not possible to reduce the chromium and other base metal contents, the Cr-VI was reduced from 100 ppm to 0,1 ppm, with the same apparatus, as before and by application of ultrasound. Without ultrasound the reduction of chromium content was only 1/3 compared to with ultrasound.

Also utilisation of the same configuration for reduction of NH₄⁺, but the results has yet not arrived.

Normally the current density is 400 - 600 A/m², or typically 0,05A/cm². The voltage depends on the electrical conductivity of the water and on the distance between the electrodes, being typically ca. 20 V DC. In case the current does not rise sufficiently, some suitable salt had to be added to increase the conductivity, in order to get the electrochemical process to work. In this case also the voltage rises. Thus the power demand is typically 5 Wh/m³ = 5*10⁻³ kWh/m³. If one kWh costs 0,5mk/kWh, purification of the water would cost 2,5 *10⁻³ mk/m³. This is 10 - 20 times cheaper as by the present method of Metsä-Botnia (MB). The investment would also be essentially lower as with the present method.

### Cleaning of river water.

In early spring titanium electrodes were used to treat river water of Seinäjoki. Colour of the water was dark brown because it originated from a swamp. The smell was unpleasant and there was lot of foam on the surface, pH=5,7. The total amount of bacteria was 540 pmy/ml, from which coliform bacteria were 250 pmy/ml. As a result of the treatment the humus was precipitated and it was possible to remove the precipitate with an ordinary coffee filter. The purified water was odourless and clear. Its O₂-content was ca. 10 mg/l, and pH=9,1. The total bacteria content was 0 pmy/ml, which can be read, in the reported analyses of the Food Laboratory.

### Preparation of utilisation water for Metsä-Botnia (MB):

Today MB takes their water from Närpiönjoki and it is purified biologically and chemically. Especially Fe and Mn have to be removed from the water, in order to prevent colouring of the cellulose.

The results are presented in the following table:

| **Results** | **Dimension** | **Raw water** | **Purified water** |
|---|---|---|---|
| pH | | 6,0 | 7,3 |
| conductivity µ₂₅ | mS/cm | 14 | 62 |
| COD | mg O₂/l | 106 | 60 |
| Total P | mg/l | | 0,18 |
| Total N | mg/l | | 7,95 |
| Total bacteria | pmy/ml | | 0 |
| Mn | mg/l | 0,19 | 0,33 |
| Fe | mg/l | 0,73 | 0,54 |
| Cl⁻ | mg/l | 10 | |

The results obtained with my method were a little better, because the filtration was not sufficient, but my method has essentially cheaper running cost and investment.

### Cleaning of waste water of MB:

Today the wastewater is cleaned biologically and chemically, after that it is directed to sea. The water does not always meet the requirements of the authority. A sample was taken of their wastewater cleaned by themselves. That was treated by my method and resulting in essentially better water than their utilisation water, in other words the water would qualify for recirculation to the process.

Also a sample was taken from their untreated wastewater. The resulted water was apparently bright, but the analyses are not yet received.

### The secondary condensate from evaporation of the spent liquor of MB:

The said condensate contains (CH₃)₂S, (CH₃)₂S₂ and H₂S which have a well known unpleasant odour even in small concentrations. The said condensate is stripped today with steam. The so obtained liquor is incinerated together with spent liquor. In spite of that the sulphur compounds still smell in the vicinity of the mill

The said sulphur containing condensate was cleaned with an iron cell 100 l/h first without ultrasound and then with ultrasound. The sulphur compounds made lot of black Fe₂S₃. The cleaned water could be smelled, but it had still a slight odour. The purity of the obtained water was still the best from these three.

A 20 kHz ultrasound probe was installed at the inlet of the water, so that the entering water went direct into the cell. The amplitude of 1 kW source had to be regulated to its minimum, because its power consumption was too large for the electronics unit. The probe had to be installed horizontally, else the power consumption would exceed the safety limit.

The production of precipitate was less and it was typically brown Fe(OH)₃. Instead of being precipitated as ferric sulphide, the sulphur compounds had apparently been oxidised to sulphate, because the odours vanished so that it was not possible to be recognise them. Hence the pulp industry could use the said water in dissolving the soda ash and thus save expensive utility water. Even larger savings follow, when the condensate doesn't need to be stripped.

### MTBE-containing water.

The method was tested to remove the additive of petrol, MTBE from ground water and to make it drinkable. The MTBE reaches the groundwater much before petrol. Today there is no economically feasible method to remove MTBE, not to mention something that could serve as standard equipment among survival equipment.

A water sample containing 0,5% MTBE was made, and it was fed into the apparatus described in the innovation. The said MTBE left as gelatine slime. The analysis gave a MTBE content of 0,01- 0,05%.

The attached drawings describes some examples of the application of the innovation, however, the examples are not aimed to limit the protective area of the innovation.
**Figure 1** shows a single pair of electrodes fitted with an ultrasound probe,
**Figure 2** shows a pair of electrodes according to figure 1 fitted in ring form,
**Figure 3** shows according to figure 2 a ring form assembly as a five story cleaning tower,

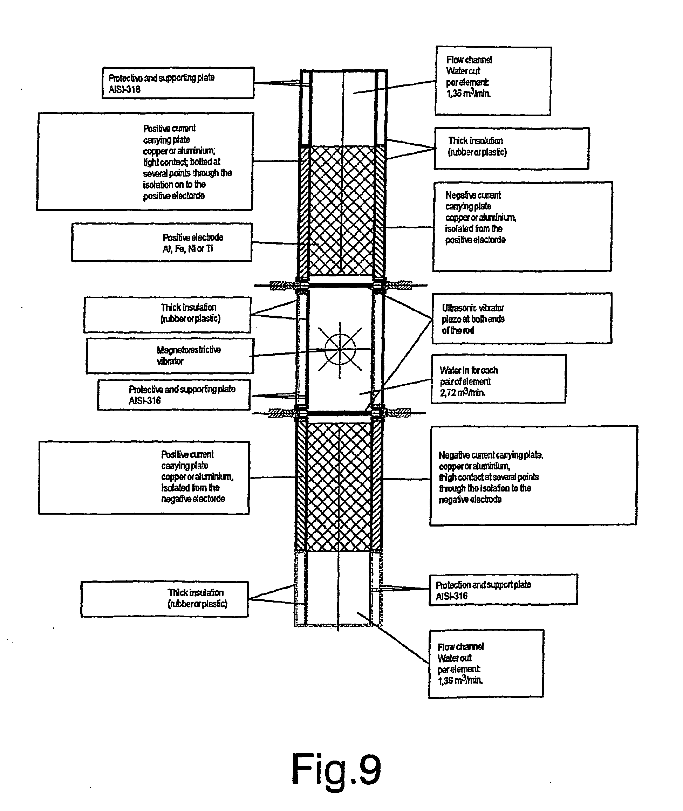

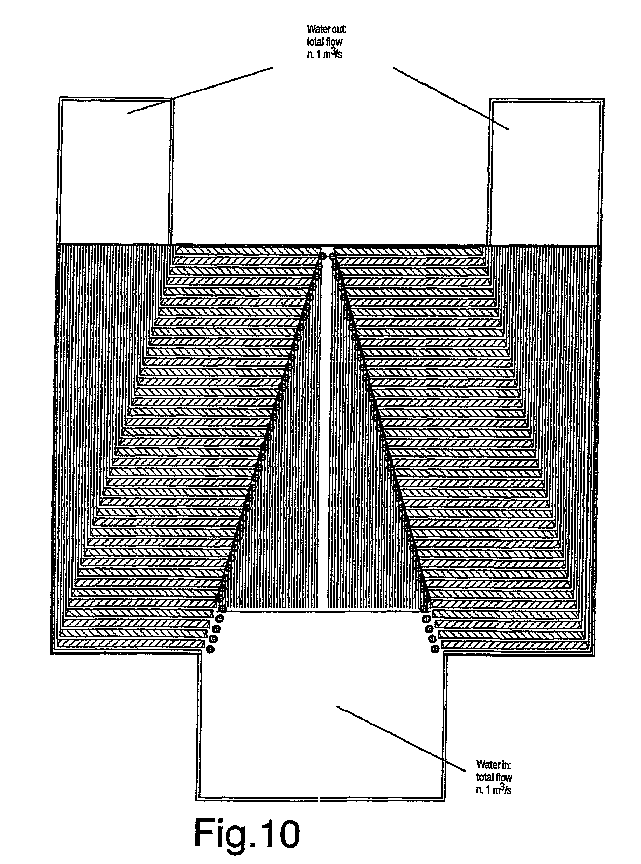

**Figures 4 - 12** show different kind of applications according to the innovation, and
**Figure 13** shows a flow sheet of the entire equipment according to the innovation.

**According to the apparatus presented in figure 1** the representation on the left hand side shows a cross-sectional side view of the electrode pair 1, which is constructed from sheet form pieces, between which is formed a long essentially straight channel 8. In the entry side of the Electrode pair 1 is located an entry fitting 7, which is widening outwards from the side of electrode body. At the entry side of the electrode pair is a shallow channel, which continues to the chamber 8. At this chamber is installed the ultrasound probe 5, which is directed in the chamber so that the central line of the channel 8 is joining the central line of the probe.

At the exit of the electrode pair 1 is located a space with a continuous enlargement, respectively, which includes an end flange 6 for possible fittings and connection of hoses. The larger figure on the right hand side shows a top view of the electrode pair, thus the channel is formed from two sheets 2 and 3, which are widening towards the outlet, however so, that in the vicinity of the outlet the plates are again tapering. At the lower part of Figure 1, four smaller pictures of different marked places represent cross-sections from the right hand side part of Figure 1.

**Figure 2** shows a pair of electrodes according to Figure 1, fitted as a ring form assembly so, that the flow channel 8 of the pair of electrodes 1, is in flow connection with the jointly formed central channel, which is formed by the ring assembly and the centre axis 9. Additionally the pair of electrodes 1 is fitted inclined upwards in respect to the central channel so, that the possible gases may easily be released through the flow channel and do not form gas pockets, and otherwise disturb the flow in the channel. Figure 2 is additionally showing an electrode probe 5, which is assembled in respect to the pair of channels at the opposite side of the central channel 9, inclined downwards, and directed so that the ultrasound jet strikes the channel 8 and is advantageously, parallel with the flow channel 8 promoting the impact of the ultra sound jet as far as possible into the channel 8.

**Figure 3** shows the entire equipment, in which five ring formed electrode pairs, of the Fig 2 design, are installed on top of each other, in respect to the central channel 9. After the upper ring 5 the central channel 9 is closed.

The flow is directed to the central channel 9, from where the flow is continuing through the flow channel of the electrode pairs, out of the apparatus. Ultra sound treatment is directed to the fluid with probes 5 installed in the flow channel.

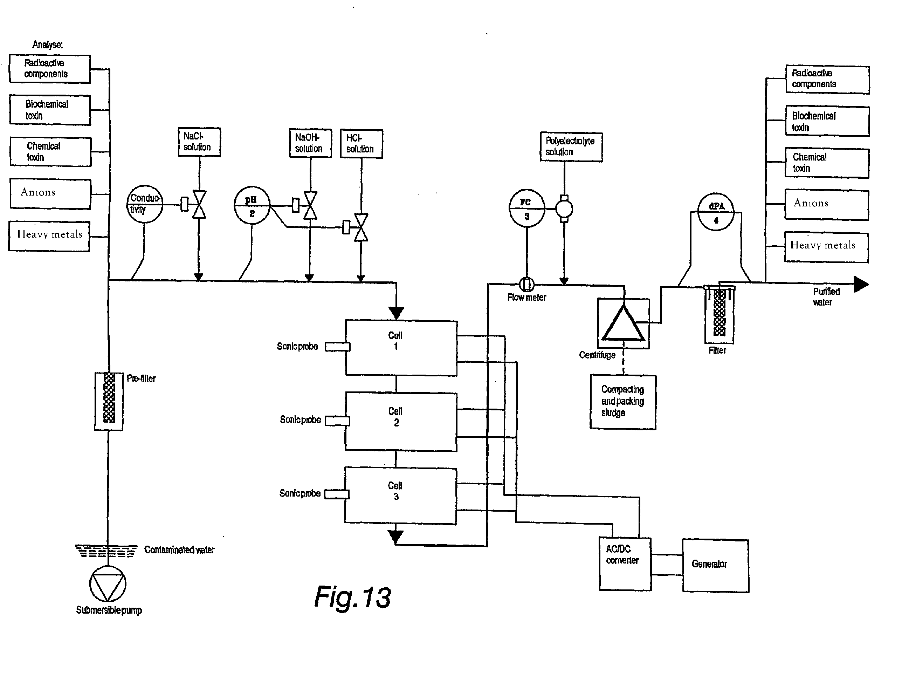

Figure 13 shows a flow sheet of an apparatus, where the cleaning principle is applied according to the innovation.

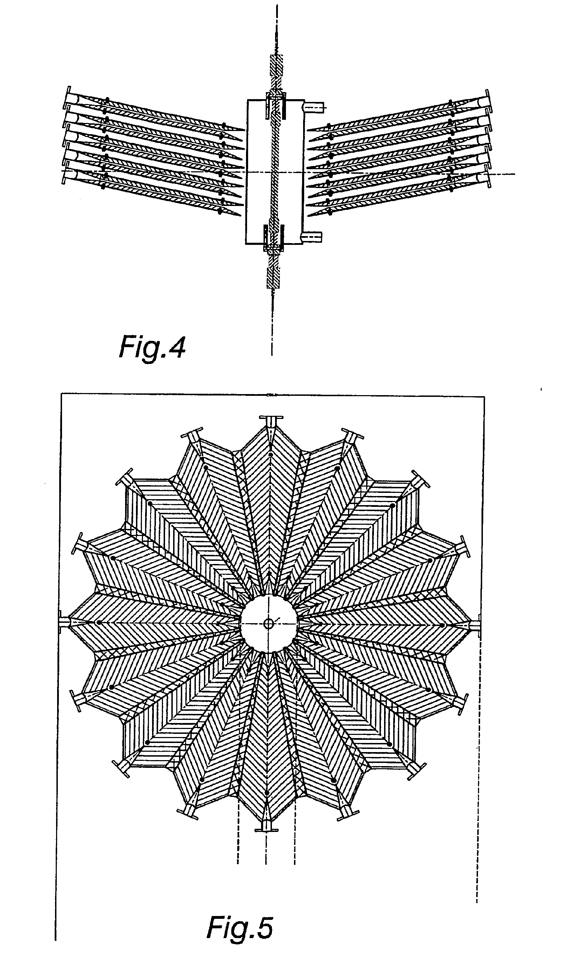

In an equipment in accordance with Figure 4 water is taken with pumps 25 from a raw water source 27, and is pre-filtered with the filters 26. Filtered water is conveyed along a pipe equipped with analysers 1- 5 for radioactive compounds, for biochemical poisons, for chemical poisons, for base metals and for anions.

For the electrolysis, the water must have a sufficient conductivity and therefore the conductivity is monitored with a gauge 6, and if necessary an electrolyte is added, for instance a NaCl-solution through valve 7. Additionally, the pH is monitored with a gauge 8, and if necessary, some sodium hydroxide solution is added through valve 9, or hydrochloric acid through valve 10, in order to make a solution with suitable pH. So the pretreated solution is conducted into the cleaning apparatus, which is formed of three sets of cells 30, 35, 40, which correspond to the tower solution with the ultrasound probes 31 shown in Figure 3. Between each electrode cell, the pH is monitored in the treated water with gauges 32, 37, 42, and if necessary, sodium hydroxide solution is added through valves 33, 38, 44, or hydrochloric acid is added through valves 34, 39, 44. The clean solution treated in this way is conducted to the outlet channel, where the flow rate is monitored by means of a flow gauge and is adjusted if necessary and a polyelectrolyte is added by means of a pump 13. After this the fluid is conducted into a service filter, which may be a centrifugal separator, clarifier or another corresponding separator. The precipitate is removed and is immobilised 22 and is taken out 45. The cleaned fluid is conducted from the service filter into a possible additional filter 23 that may be several, each filter may be fitted with a pressure monitor, with which the flow may be regulated into the additional filter. The fluid is conducted from this filtering unit through an outlet pipe 24 to the place of usage. At the outlet pipe there may be analysers, where the radioactive, biological, organic, base metal and anion residuals are monitored as at the inlet pipe.

### Some possible applications

- Purifying potable water from natural water. A temporary water supply.
- Pulp mill sewage, utility water and condensate from evaporation of the spent liquor.
- Sewage treatment, generally.
- Leak water from landfills
- Removal of base metals from potable water (As, Cd, Cs, Cu, Fe, Mn, Ni, Zn, U).
- Cyanides and CN-complexes.
- Odour control of liquid manure.
- Colloid form of active sludge and thus making it suitable for filtration.
- Odour control of anaerobic sludge and making it suitable for filtration.
- Electro plating plant sewage.
- Pickling sewage.
- Potato flour plant sewage.
- Food factory sewage.
- Tannery sewage.
- Slaughterhouse sewage.
- Sewage from dairies and milk producers, as well as from cheese plants.
- Sewage from hospitals and from health centres.
- Sewage from oil refinery.
- Control of catastrophes: Cleaning of MTBE containing ground water.
- Cleaning of ground water containing petrol and diesel fuels.
- Use in defence forces, water supplies contaminated by war gases and biological combat poisons (anthrax, botulinous toxin, afla toxin) and temporary water sources for different purposes.
- Water supplies and temporary water sources contaminated with radioactive down fall.
- Leak waters from nuclear power stations and nuclear fuels.
- Uranium mines and concentrators.

## Claims

1. An apparatus for the cleaning of a liquid, especially water, electrolytically, by feeding the liquid to be treated, through a current field generated by electrodes, said apparatus comprising at least one pair of electrodes between which a flow channel for the liquid is formed, and at least one ultra sonic source, which directs the beam of the ultrasound into the flow channel and so into the liquid to be treated, **characterised in that** the electrodes are assembled into a ring, which is formed of several, radially outwards from a central channel extending pairs of electrodes, the flow channel extending between said pair of electrodes is in flow connection with the central channel.

2. An apparatus according to claim 1 **characterised in that** there are several sequential electrode rings in the direction of the central channel.

3. An apparatus according to claim 1 and 2 **characterised in that** the flow channel of the pair of electrodes extends slightly upwards from the inlet strengthening the evacuation of released gases.

4. An apparatus according to any of the previous claims, **characterised in that** the electrodes in the flow direction are divided into segments, said segments may have different characteristics, with respect to effect, material, form, design, etc.

5. An apparatus according to any of the previous claims **characterised in that** the apparatus is equipped with magnetostrictive vibrator and/or pulsation equipment feeding the liquid to be treated in pulses into the central channel to produce turbulence in the liquid.

6. An apparatus according to any of the previous claims **characterised in that**, between the electrodes a strong direct current is generated, preferably with a current density of about. 0.05 A/cm² .

7. An apparatus according to any of the previous claims **characterised in that**, the ultrasonic sources are placed close to inlet of the channel separated from the electrodes and directing the sound towards the first part of the channel.

8. An apparatus according to any of the previous claims **characterised in that**, the ultrasonic source is fixed to the electrodes.

9. An apparatus according to claim 6 **characterised in that** each electrode segment is equipped with an ultrasonic source and/or a magnetostrictive vibrator and/or pulsation equipment.

10. An apparatus according to any of the previous claims **characterised in that**, the frequency of the ultrasonic source is 20 kHz.

11. An apparatus according to any of the previous claims **characterised in that** the electrodes are made of a metal, such as titanium, or titanium coated by an oxide of a platinum group metal, or some less precious metal, such as iron, nickel or aluminium.

12. An apparatus according to any of the previous claims **characterised in that** at least one of the electrode systems rotates in respect of the central axis.

13. An apparatus according to claim 12 **characterised in that** the rotating electrode system is equipped with spiral formed guiding wings.

14. An apparatus according to claim 12 or 13 **characterised by** in that the electrode systems are interconnected and are rotating together.

## Patentansprüche

1. Vorrichtung zur elektrolytischen Reinigung einer Flüssigkeit, insbesondere von Wasser, durch Zuführen der zu behandelnden Flüssigkeit durch ein durch Elektroden erzeugtes Stromfeld, wobei die Vorrichtung mindestens ein Elektrodenpaar umfasst, zwischen dem ein Strömungskanal für die Flüssigkeit ausgebildet ist, und mindestens eine Ultraschallquelle, die den Strahl des Ultraschalls in den Strömungskanal und damit in die zu behandelnde Flüssigkeit richtet, **dadurch gekennzeichnet, dass** die Elektroden in einem Ring angeordnet sind, der aus mehreren von einem Zentralkanal radial nach außen verlaufenden Elektrodenpaaren gebildet wird, und der zwischen dem Elektrodenpaar verlaufende Strömungskanal in Fließverbindung mit dem Zentralkanal ist.

2. Vorrichtung nach Anspruch 1, **dadurch gekennzeichnet, dass** mehrere auf einander folgende Elektrodenringe in Richtung des Zentralkanals vorhanden sind.

3. Vorrichtung nach Anspruch 1 oder 2, **dadurch gekennzeichnet, dass** der Strömungskanal des Elektrodenpaars vom Einlass leicht nach oben verläuft, was die Abführung von freigesetzten Gasen unterstützt.

4. Vorrichtung nach einem der vorhergehenden Ansprüche, **dadurch gekennzeichnet, dass** die Elektroden in Strömungsrichtung in Segmente unterteilt sind, wobei die Segmente verschiedene Eigenschaften im Hinblick auf die Wirkung, das Material, die Form, die Ausgestaltung usw. aufweisen können.

5. Vorrichtung nach einem der vorhergehenden Ansprüche, **dadurch gekennzeichnet, dass** die Vorrichtung mit einer Magnetostriktionsvibrator- und/oder Pulsationseinrichtung ausgestattet ist, die die zu behandelnde Flüssigkeit in Pulsen dem Zentralkanal zuführt, um in der Flüssigkeit Turbulenzen zu erzeugen.

6. Vorrichtung nach einem der vorhergehenden Ansprüche, **dadurch gekennzeichnet, dass** zwischen den Elektroden ein starker Gleichstrom ausgebildet wird, vorzugsweise mit einer Stromdichte von ca. 0,05 A/cm².

7. Vorrichtung nach einem der vorhergehenden Ansprüche, **dadurch gekennzeichnet, dass** die Ultraschallquellen nahe zum Einlass des Kanals getrennt von den Elektroden platziert sind und den Schall gegen den ersten Teil des Kanals richten.

8. Vorrichtung nach einem der vorhergehenden Ansprüche, **dadurch gekennzeichnet, dass** die Ultraschallquelle an die Elektroden fixiert ist.

9. Vorrichtung nach Anspruch 6, **dadurch gekennzeichnet, dass** jedes Elektrodensegment mit einer Ultraschallquelle und/oder einer Magnetostrilctionsvibrator- und/oder Pulsationseinrichtung ausgestattet ist.

10. Vorrichtung nach einem der vorhergehenden Ansprüche, **dadurch gekennzeichnet, dass** die Frequenz der Ultraschallquelle 20 kHz beträgt.

11. Vorrichtung nach einem der vorhergehenden Ansprüche, **dadurch gekennzeichnet, dass** die Elektroden aus einem Metall bestehen, wie z.B. Titan, oder aus mit einem Oxid eines Platingruppen-Metalls beschichteten Titan, oder aus einem etwas weniger edlen Metall, wie z.B. Eisen, Nickel oder Aluminium.

12. Vorrichtung nach einem der vorhergehenden Ansprüche, **dadurch gekennzeichnet, dass** mindestens eines der Elektrodensysteme in Bezug auf die Zentralachse rotiert.

13. Vorrichtung nach Anspruch 12, **dadurch gekennzeichnet, dass** das rotierende Elektrodensystem mit spiralförmigen Führungsflügeln ausgestattet ist.

14. Vorrichtung nach Anspruch 12 oder 13, **dadurch gekennzeichnet, dass** die Elektrodensysteme mit einander verbunden sind und zusammen rotieren.

## Revendications

1. Dispositif pour le nettoyage électrolytique d'un liquide, en particulier de l'eau, en faisant passer le liquide à traiter à travers un champ électrique généré par des électrodes, ledit dispositif comprenant au moins une paire d'électrodes entre lesquelles est formé un canal d'écoulement pour le liquide, et au moins une source d'ultrasons qui dirige le faisceau d'ultrasons dans le canal d'écoulement et ainsi dans le liquide à traiter, **caractérisé en ce que** les électrodes sont assemblées en un anneau qui est constitué de plusieurs paires d'électrodes s'étendant radialement vers l'extérieur à partir d'un canal central et le canal d'écoulement s'étendant entre ladite paire d'électrodes est en liaison d'écoulement avec le canal central.

2. Dispositif selon la revendication 1, **caractérisé en ce qu'**il y a plusieurs anneaux d'électrode successifs dans la direction du canal central.

3. Dispositif selon la revendication 1 et 2 **caractérisé en ce que** le canal d'écoulement de la paire d'électrodes s'étend légèrement vers le haut à partir de l'entrée, ce qui renforce l'évacuation des gaz libérés.

4. Dispositif selon l'une quelconque des revendications précédentes, **caractérisé en ce que** les électrodes sont divisées en segments dans la direction de l'écoulement et lesdits segments peuvent avoir des caractéristiques différentes pour ce qui est de l'effet, du matériau, de la forme, de la conception etc...

5. Dispositif selon l'une quelconque des revendications précédentes **caractérisé en ce que** le dispositif est pourvu d'un moyen de génération d'impulsions et / ou d'un vibrateur magnétostrictif pour amener le liquide à traiter par impulsions dans le canal central pour engendrer une turbulence dans le liquide.

6. Dispositif selon l'une quelconque des revendications précédentes **caractérisé en ce qu'**un courant continu fort est généré entre les électrodes, de préférence avec une densité de courant d'environ 0,05 A/cm².

7. Dispositif selon l'une quelconque des revendications précédentes **caractérisé en ce que** les sources d'ultrasons sont disposées à proximité de l'entrée du canal, séparées des électrodes et dirigeant le son vers la première partie du canal.

8. Dispositif selon l'une quelconque des revendications précédentes **caractérisé en ce que** la source d'ultrasons est fixée aux électrodes.

9. Dispositif selon la revendication 6 **caractérisé en ce que** chaque segment d'électrode est pourvu d'une source d'ultrasons et / ou d'un moyen de génération d'impulsions et / ou d'un vibrateur magnétostrictif.

10. Dispositif selon l'une quelconque des revendications précédentes **caractérisé en ce que** la fréquence de la source d'ultrasons est de 20 kilohertz.

11. Dispositif selon l'une quelconque des revendications précédentes **caractérisé en ce que** les électrodes sont en métal tel que le titane ou le titane revêtu d'un oxyde d'un métal du groupe du platine ou d'un métal moins précieux tel que le fer, le nickel ou l'aluminium.

12. Dispositif selon l'une quelconque des revendications précédentes **caractérisé en ce qu'**au moins l'un des systèmes d'électrode tourne par rapport à l'axe central.

13. Dispositif selon la revendication 12 **caractérisé en ce que** le système d'électrode tournant est pourvu d'ailes de guidage en forme de spirale.

14. Dispositif selon la revendication 12 ou 13 **caractérisé en ce que** les systèmes d'électrode sont reliés entre eux et tournent ensemble.
